# EUROPÄISCHE PATENTSCHRIFT

(11) **EP 2 345 865 B1**
(45) Veröffentlichungstag und Bekanntmachung des Hinweises auf die Patenterteilung: **16.04.2014**
(21) Anmeldenummer: 10195846.0
(22) Anmeldetag: 20.12.2010
(51) Int. Cl.: F41G 1/38, G02B 23/10, G02B 27/34

(54) **Zielfernrohr**
Telescopic sight
Lunette de visée

(30) Priorität: 19.01.2010 DE 102010005122
(43) Veröffentlichungstag der Anmeldung: 20.07.2011
(73) Patentinhaber: SCHMIDT & BENDER GmbH & Co. KG, 35444 Biebertal (DE)
(72) Erfinder: Tesmar, Manuela, 61191, Rosbach v. d. Höhe (DE); Helke Karen, Hesse, 35934, Giessen (DE); Christoph Hilmar, vom Hagen, 35390, Giessen (DE)
(74) Vertreter: Patentanwälte Olbricht Buchhold Keulertz

(56) Entgegenhaltungen:
- DE-A1-102006 035 777
- DE-U1- 9 312 604
- DE-U1- 29 903 989
- DE-U1-202008 012 601
- US-A- 3 672 782
- US-A- 4 584 776

## Beschreibung

Die Erfindung betrifft ein Zielfernrohr gemäß dem Oberbegriff von Anspruch 1.

Gebräuchliche Zielfernrohre verfügen für gewöhnlich über eine oder mehrere im Strahlengang sichtbare Visierhilfen, welche je nach Konstruktionsart in der ersten, objektivseitigen Bildebene und/oder in der zweiten, okularseitigen Bildebene des Zielfernrohrs vorgesehen sind. Zwischen den beiden Bildebenen ist üblicherweise ein optisches Umkehrsystem angeordnet. Dieses dient zum einen dazu, das zunächst auf dem Kopf stehende und seitenverkehrte Bild aufzurichten. Zum anderen kann durch das Umkehrsystem eine variable Vergrößerung des Zielfernohrs erreicht werden.

Im Stand der Technik sind verschiedene Arten von Visierhilfen bekannt. Bei einer Visierhilfe kann es sich beispielsweise um ein Absehen handeln. Ein Absehen ist häufig eine durch Ätzen oder das Einbringen von Metalldrähten erzeugte Strichplatte, deren Strukturierung verschiedene Muster aufweisen kann. Eine besonders geläufige Ausgestaltung ist das Fadenkreuz. Neben dieser schlichten Gestaltungsweise sind aber auch komplexere Arten von Absehen bekannt. Diese können beispielsweise Merkmale aufweisen, die die Bestimmung der Zielentfernung erleichtern bzw. verbessern.

Um auch bei schlechten Lichtverhältnissen und in der Dämmerung eine zufriedenstellende Erkennbarkeit des Absehens auf dem Zielbild zu gewährleisten, sind häufig Beleuchtungseinrichtungen vorgesehen.

Eine weitere Art der Visierhilfe ist in der DE 299 03 989 U1 beschrieben. Die Druckschrift offenbart ein Zielfernrohr mit einem in einem Strahlengang zwischen einem Okular- und einem Objektivlinsensystem angeordneten, gegenüber einer optischen Achse geneigten Strahlenteiler, mit einer Projektionseinrichtung zur Erzeugung einer von dem Okularlinsensystem aus sichtbaren Zielmarke auf dem Strahlenteiler, wobei die Projektionseinrichtung eine Lichtquelle aufweist, und wobei der Strahlenteiler und die Lichtquelle als eine bauliche und gemeinsam bewegbare Einheit gestaltet sind. Um die Zielmarke an verschiedene vorherrschende Lichtverhältnisse anpassen zu können, ist ferner eine dimm- und schaltbare Lichtquelle vorgesehen.

Bei einer Anordnung der Visierhilfe in der ersten Bildebene des Zielfernrohrs, d.h. vor dem Umkehrsystem, wird die Visierhilfe bei einem Vergrößerungswechsel gemeinsam mit dem Zielobjekt vergrößert bzw. verkleinert. Infolgedessen bleibt die Relation zwischen Visierhilfe und Zielobjekt unabhängig von der jeweiligen Vergrößerung immer gleich. Über die Dimension der Visierhilfe im Verhältnis zum Zielobjekt kann daher die Entfernung des Zielobjekts bestimmt werden. Nachteilig ist jedoch, dass die Visierhilfe bei großen Vergrößerungen einen großen Teil des Zielobjekts abdeckt.

Bei einer Anordnung der Visierhilfe in der zweiten Bildebene befindet sich die Visierhilfe hinter dem Umkehrsystem. Bei einem Vergrößerungswechsel verändert sich nur die Größe des Zielobjekts, die Dimensionierung der Visierhilfe bleibt hingegen stets gleich. Infolgedessen kann eine derart ausgestaltete Visierhilfe jedoch nicht zur Bestimmung der Zielentfernung verwendet werden.

In der DE 20 2008 012 601 U1 ist eine Zieloptik mit einem in einer ersten dem Objektiv nächsten Bildebene angeordneten Fadenkreuzstrichbild, und einem in einer zweiten dem Okular nächsten Bildebene angeordneten Zielpunktabsehen offenbart. Für beide Absehen ist eine schaltbare Beleuchtungseinrichtung vorgesehen. Dadurch sollen die beiden Absehen je nach Beleuchtungszustand entweder zusammen oder unabhängig voneinander nutzbar sein.

Mit Hilfe der beschriebenen Lehre werden sowohl die Vorzüge eines Absehens in der ersten Bildebene als auch die eines Absehens in der zweiten Bildebene genutzt. Ein deutlicher Nachteil ist jedoch, dass die Zielmarke in der zweiten Bildebene auch bei ausgeschalteter Beleuchtungseinrichtung durchaus sichtbar ist, wodurch das Zielbild zumindest teilweise verdeckt wird. Das Verdecken des Zielbildes ist für den Schützen nicht nur störend, vielmehr wird auch die Treffsicherheit herabgesetzt.

Ausgehend von diesem Stand der Technik ist es Aufgabe der Erfindung ein Zielfernrohr zur Verfügung zu stellen, welches dem Schützen ein hohes Maß an Unterstützung sowohl bei flüchtigen Schüssen, wie z.B. in der Drückjagd, als auch bei präzisen Schüssen insbesondere auf große Distanzen bietet. Darüber hinaus soll das Zielfernrohr eine Bestimmung der Zielentfernung ermöglichen.

Hauptmerkmale der Erfindung sind im kennzeichnenden Teil von Anspruch 1 angegeben. Ausgestaltungen sind Gegenstand der Ansprüche 2 bis 9.

Bei einem Zielfernrohr mit einem in einem Strahlengang zwischen einem Objektiv und einem Okular angeordneten, gegenüber einer optischen Achse geneigten Strahlenteiler, mit einer Projektionseinrichtung zur Erzeugung einer von dem Okular aus sichtbaren Zielmarke auf dem Strahlenteiler, wobei die Projektionseinrichtung eine Lichtquelle aufweist, und wobei zwischen dem Objektiv und dem Okular zwei Bildebenen vorgesehen sind, von denen eine erste Bildebene näher am Objektiv und eine zweite Bildebene näher am Okular angeordnet ist, und wobei zwischen den Bildebenen ein Umkehrsystem angeordnet ist, sieht die Erfindung vor, dass in der ersten Bildebene ein Absehen und in der zweiten Bildebene die Zielmarke vorgesehen ist.

Das Absehen in der ersten Bildebene weist unabgängig von der eingestellten Vergrößerung ein gleich bleibendes Größenverhältnis bezüglich des Zielobjekts auf. Diese konstante Relation kann zusammen mit der eingestellten Vergrößerung zur Bestimmung der Zielentfernung genutzt werden. Durch die Positionierung des Absehens in der ersten Bildebene wird somit ein einfaches und kostengünstiges Mittel zur Bestimmung der Zielentfernung zur Verfügung gestellt. Das Absehen ist dabei durch ein beleuchtetes Fadenkreuz, welches durch eine Strichplatte gebildet wird ausgebildet.

Zusätzlich zum Absehen in der ersten Bildebene verfügt das erfindungsgemäße Zielfernrohr über eine Zielmarke in der zweiten Bildebene. Die Zielmarke kann bei Bedarf, beispielsweise für einen flüchtigen Schuss auf kurze Distanz zugeschaltet werden. Auch große Entfernungen bzw. große Vergrößerungen können, insbesondere bei schlechten Lichtverhältnissen, dazu führen, dass das Absehen in der ersten Bildebene nur schwer erkennbar ist. Die Zielmarke in der zweiten Bildebene ermöglicht, dass auch in derartigen Situationen ein präziser Schuss abgegeben werden kann. Infolgedessen wird durch die erfindungsgemäße Ausgestaltung ein Zielfernrohr zur Verfügung gestellt, welches in durchaus unterschiedlichen Situationen ein hohes Maß an Treffsicherheit gewährleistet.

Die zweite Bildebene ist hinter dem Umkehrsystem, welches die Vergrößerungseinrichtung des Zielfernrohrs umfasst, angeordnet. Aufgrund der Positionierung der Zielmarke in der zweiten Bildebene wird diese bei einem Vergrößerungswechsel nicht vergrößert bzw. verkleinert, sondern bleibt vielmehr unverändert. Dadurch kann über den gesamten Vergrößerungsbereich eine feine Struktur der Zielmarke sichergestellt werden. Dies ist insbesondere bei flächigen Zielmarkenmustern vorteilhaft. Beispielsweise können punktförmige Zielmarkenmuster vom Auge in besonders kurzer Zeit ohne große Akkomodationsarbeit erfasst werden, aus diesem Grund ist ihr Einsatz häufig wünschenswert. Ein solches Muster würde allerdings bei einer Vergrößerung der Visierhilfe einen großen Teil des Zielbildes verdecken. Die Positionierung der Zielmarke in der zweiten Bildebene stellt daher in äußerst vorteilhafter Weise die Nutzung verschiedenster Zielmarkenmuster sicher, da die Zielmarke das Anvisieren des Ziels unterstützt und das Zielobjekt auch bei großen Vergrößerungen nicht verdeckt. Dies wirkt sich äußerst positiv auf die Treffsicherheit aus und steigert ferner den Komfort des Zielfernrohrs.

Es ist weiterhin von Vorteil, dass es sich bei der Zielmarke um eine von einer Projektionseinrichtung eingestrahlte Zielmarke handelt. Mit Ausnahme des Strahlenteilers sind sämtliche für das Erzeugen der Zielmarke erforderlichen Komponenten außerhalb des Strahlengangs angeordnet. Der Strahlenteiler wird von dem Schützen jedoch nicht wahrgenommen. Diese Ausgestaltung ermöglicht somit, dass im ausgeschalteten Zustand von dem Schützen ausschließlich das Absehen, welches in der ersten Bildebene angeordnet ist realisiert wird. Infolgedessen wird durch die erfindungsgemäße Gestaltung ein Zielfernrohr zur Verfügung gestellt, welches die verschiedenen Vorteile von Visierhilfen in den unterschiedlichen Bildebenen nutzbar macht. Wird die Zielmarke in der zweiten Bildebene nicht benötigt, so kann sie abgeschaltet werden, wobei für den Schütze keinerlei Beeinträchtigung des Zielbildes auftritt.

Es ist weiterhin, gemäß der Erfindung, vorgesehen, dass der Strahlenteiler in der zweiten Bildebene angeordnet ist. Dadurch wird ein Mittel zur Verfügung gestellt, mit Hilfe dessen die Zielmarke in der zweiten Bildebene sichtbar ist.

Es ist bevorzugt, dass der Strahlenteiler eine gegenüber der optischen Achse geneigte Grenzfläche eines Prismas ist. Durch diese Ausgestaltung kann die Zielmarke in besonders einfacher und kostengünstiger Weise bereitgestellt werden. Der Strahlenteiler ist ein optisches Bauteil, welches ermöglicht, dass die von der Projektionseinrichtung erzeugte Zielmarke vom Okular aus sichtbar ist.

Vorteilhaft bei der Verwendung wenigstens eines Prismas als Strahlenteiler ist weiterhin, dass das vom Objektiv einfallende Licht, beispielsweise verglichen mit einem halbdurchlässigen Spiegel, kaum absorbiert oder reflektiert wird. Die Zieloptik weist daher auch bei schlechten Sichtverhältnissen eine gute Zielbildqualität auf.

Eine Weiterbildung der Erfindung sieht vor, dass der Strahlenteilter von unmittelbar aneinander anliegenden, gegenüber der optischen Achse geneigten Grenzflächen zweier Prismen gebildet ist, wobei die Prismen aus Materialien mit unterschiedlichen Brechungsindizes gefertigt sind. Neben der stabilen Bauweise des Strahlenteilers kann auf diese Weise zudem der Kontrast der Zielmarke verbessert werden. Durch eine geeignete Wahl der Materialien und des Neigungswinkels der aneinanderstoßenden Prismenflächen, kann zudem ein Mittel zur Verfügung gestellt werden, das es ermöglicht, dass z.B. nur der rote Anteil des von der Projektionseinrichtung eingestrahlten Lichts zum Objektiv reflektiert wird, während die anderen Wellenlängen durchgelassen werden. Die Zielmarke wird ohne störende Reflexion mit dem vom Objektiv einfallenden Bild überlagert.

Bevorzugt ist weiterhin, dass auf einem der Prismen wenigstens ein Teil der Projektionseinrichtung angeordnet ist. Diese Ausgestaltung ermöglicht, dass die Bauteile zunächst miteinander verbunden und schließlich gemeinsam eingesetzt werden können. Eine derartige Anordnung ist äußerst kompakt und zudem wird durch das Einsetzen einer vorgefertigten Baugruppe der Herstellprozess vereinfacht.

Eine weitere Ausgestaltung sieht vor, dass die Projektionseinrichtung eine Blende umfasst. Vorteilhaft dabei ist, dass eine Blende, welche eine entsprechend der vorgesehenen Zielmarkenform geformte Ausnehmung aufweist, ein besonders kostengünstiges und einfaches Mittel zur Erzeugung verschiedener Zielmarkenmuster und -größen darstellt. Auf diese Weise kann beispielsweise ein Leuchtpunkt oder ein Fadenkreuz als Zielmarkenmuster mit einfachen Mitteln kostengünstig erzeugt werden.

Eine bevorzugte Ausgestaltung des Zielfernrohrs sieht ferner vor, dass die Projektionseinrichtung eine Batterie aufweist. Die Batterie stellt die Stromversorgung der Projektionseinrichtung zuverlässig sicher. Im Handel sind Batterien sind mit verhältnismäßig kleinen Abmessungen verfügbar, so dass die optische Gestalt des Zielfernrohrs durch die Stromversorgung nahezu nicht beeinflusst wird. Eine im Gehäuse vorgesehene Ersatzbatterie bietet zusätzliche Sicherheit.

Es ist weiterhin besonders bevorzugt, dass für die Lichtquelle ein Regler vorgesehen ist. Dies ist besonders vorteilhaft, da das Zielfernrohr durch den Regler den jeweiligen Lichtverhältnissen angepasst werden kann. Bei guten Lichtverhältnissen kann beispielsweise eine sehr schwache Intensität der Zielmarke gewählt werden. Dadurch wird verhindert, dass die Zielmarke das einfallende Zielbild überstrahlt.

Eine wichtige Ausführungsform der Erfindung sieht vor, dass die Zielmarke ein Leuchtpunkt ist. Dieses Zielmarkenmuster stellt insbesondere bei flüchtigen Schüssen eine gute Visierhilfe dar. Die zentrale Schusspunktlage bietet eine gute Erkennbarkeit in kurzer Zeit, da das Zielbild nur minimal verdeckt wird. Durch das geringe Ausmaß an erforderlicher Akkomodationsarbeit ist der Leuchtpunkt auch bei längeren Einsätzen äußerst vorteilhaft.

Darüber hinaus ist bevorzugt, dass das Absehen eine dimm- und/oder schaltbare Beleuchtungseinrichtung aufweist. Auf diese Weise kann auch die in diesem Fall permanent sichtbare Visierhilfe den gegebenen Lichtverhältnissen angepasst werden. Dies wirkt sich ebenfalls äußerst positiv auf die Treffsicherheit aus und verhindert zudem, dass das Auge des Schützen bei schlechten Lichtverhältnissen frühzeitig ermüdet.

Weitere Merkmale, Einzelheiten und Vorteile der Erfindung ergeben sich aus dem Wortlaut der Ansprüche sowie aus den folgenden Beschreibungen von Ausführungsbeispielen anhand der Zeichnungen.

Es zeigen:
- Fig. 1: einen Innentubus eines erfindungsgemäßen Zielfernrohrs,
- Fig. 2: ein bekanntes Zielfernrohr im Längsschnitt,
- Fig. 3: ein bekanntes Zielfernrohr in der Seitenansicht.

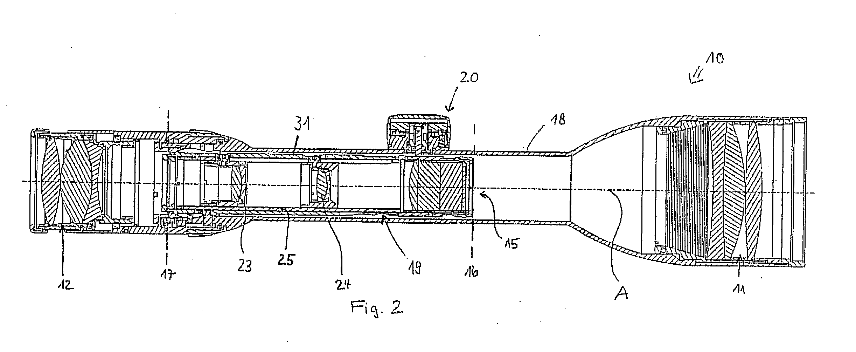

Figur 2 zeigt ein allgemein mit 10 bezeichnetes Zielfernrohr. Dieses Zielfernrohr 10 ist aus dem Stand der Technik bekannt.

Der Längsschnitt durch das Zielfernrohr 10 zeigt einen Außentubus 18, in dem ein Objektiv 11, ein Innentubus 19, und ein Okular 12 angeordnet sind. Zwischen dem Objektiv 11 und dem Okular 12 sind die erste Bildebene 16 und die zweite Bildebene 17 vorgesehen. In der ersten Bildebene 16 ist ein Absehen 15 angeordnet. Der Innentubus 19 ist an seiner dem Okular 12 zugewandten Seite in einem Kardanlager beweglich gelagert. Am Außentubus 18 ist ein Verstellturm 20 festgelegt. Der Verstellturm 20 verfügt über ein Mittel, welches am Innentubus 19 anliegt. Durch den Verstellturm 20 kann ein Verstellen des Innentubus z.B. zum Ausgleich von Seitenwind bewirkt werden. Der Innentubus 19 weist eine Führungshülse 25 auf, in welcher zwei in Fassungen eingefasste Umkehrsystemlinsen 23, 24 angeordnet sind. Die Umkehrsystemlinsen 23, 24 sind entlang der optischen Achse A beweglich gelagert.

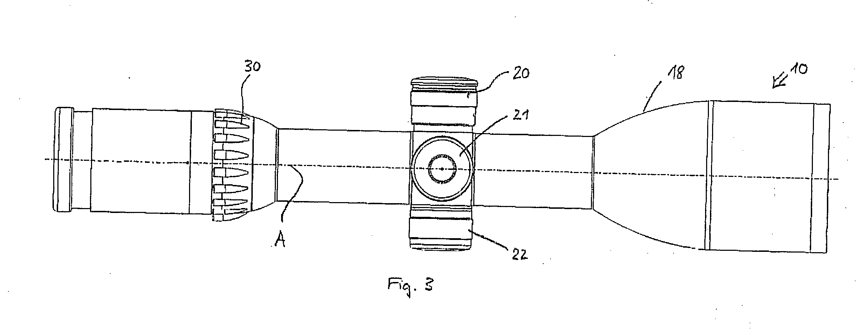

Die in Figur 3 dargestellte Seitenansicht eines aus dem Stand der Technik bekannten Zielfernrohrs 10 zeigt drei Verstelltürme 20, 21 und 22, welche an einem Außentubus 18 angeordnet sind, sowie eine optische Achse A. Das Zielfernrohr 10 verfügt ferner über eine Verstelleinrichtung 30, mit Hilfe derer die Vergrößerung des Zielfernrohrs 10 variiert werden kann.

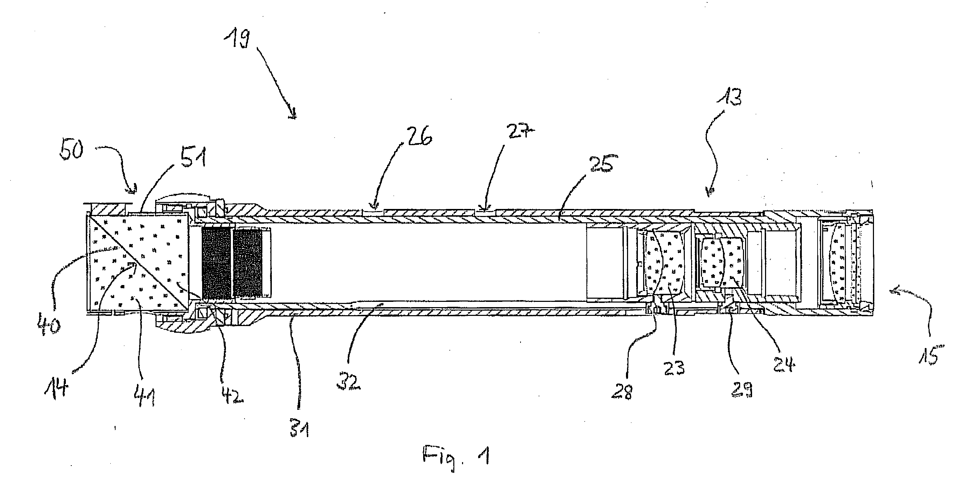

In Figur 1 ist ein Innentubus 19 eines erfindungsgemäßen Zielfernrohrs 10 dargestellt. Der Innentubus 19 verfügt über eine Schneckenhülse 31, welche zwei schneckenförmige Ausnehmung 26, 27 aufweist. Die schneckenförmigen Ausnehmungen 26, 27 sind bevorzugt als Schlitze ausgebildet. In der Schneckenhülse 31 ist eine Führungshülse 25 angeordnet. Die Führungshülse 25 weist eine Aussparung 32 auf, welche bevorzugt als Längsschlitz ausgebildet ist und parallel zur Längsachse des Innentubus 19 verläuft. In der Führungshülse 25 ist ein Umkehrsystem 13 angeordnet. Das Umkehrsystem 13 umfasst zwei Umkehrsystemlinsen 23, 24, welche in Fassungen eingefasst sind, und über einen Mitnehmerstift 28 bzw. 29, der jeweils in einer der schneckenförmigen Ausnehmungen 26 bzw. 27 der Schneckenhülse 31 gelagert ist, bewegbar sind.

Der Innentubus 19 umfasst außerdem einen Strahlenteiler 40. Dieser wird von unmittelbar aneinander anliegenden Grenzflächen zweier Prismen 41, 42 gebildet, wobei die Prismen 41, 42 aus Materialien mit unterschiedlichen Brechungsindizes gefertigt sein können. Auf dem Prisma 42 ist eine als Leuchtdiode ausgebildete Lichtquelle 51 einer Projektionseinrichtung 50 angeordnet. Neben der Leuchtdiode können auch andere geeignete Lichtquellen verwendet werden.

Mit Hilfe der Projektionseinrichtung 50 kann eine Zielmarke 14 auf den Strahlenteiler 40 erzeugt werden. Die Projektionseinrichtung 50 kann unter Umständen eine zwischen der Lichtquelle 51 und dem Prisma 42 angeordnete Blende, welche eine entsprechend der Zielmarke 14 geformte Ausnehmung aufweist umfassen. Außerdem verfügt die Projektionseinrichtung 50 über eine nicht dargestellt Batterie zur Stromversorgung und über einen ebenfalls nicht dargestellten dimm- und schaltbaren Regler. An der dem Strahlenteiler 40 gegenüberliegenden Seite des Innentubus 19 ist ein Absehen 15 angeordnet. Das Absehen 15 kann eine Strichplatte sein, deren Muster durch z.B. Ätzen oder das Einbringen von Metalldrähten erzeugt wurde. Das Muster kann beispielsweise ein Fadenkreuz sein.

Die Erfindung ist nicht auf eine der vorgeschriebenen Ausführungsformen beschränkt, sondern in vielfältiger Weise abwandelbar.

Sämtliche aus den Ansprüchen, der Beschreibung und den Zeichnungen hervorgehenden Merkmale und Vorteile, einschließlich konstruktiver Einzelheiten, räumlicher Anordnungen und Verfahrensschritten, können sowohl für sich als auch in den verschiedensten Kombinationen erfindungswesentlich sein.

### Bezugszeichenliste

- A: optische Achse
- 10: Zielfernrohr
- 11: Objektiv
- 12: Okular
- 13: Umkehrsystem
- 14: Zielmarke
- 15: Absehen
- 16: erste Bildebene
- 17: zweite Bildebene
- 18: Außentubus
- 19: Innentubus
- 20,21,22: Verstellturm
- 23,24: Umkehrsystemlinse
- 25: Führungshülse
- 26,27: schneckenförmige Ausnehmung
- 28,29: Mitnehmerstift
- 30: Verstelleinrichtung
- 31: Schneckenhülse
- 32: Aussparung
- 40: Strahlenteiler
- 41,42: Prisma
- 50: Projektionseinrichtung
- 51: Lichtquelle

## Patentansprüche

1. Zielfernrohr (10) mit einem Strahlengang zwischen einem Objektiv (11) und einem Okular (12), wobei
zwischen dem Objektiv (11) und dem Okular (12) zwei Bildebenen vorgesehen sind, von denen eine erste Bildebene näher am Objektiv (11) und eine zweite Bildebene näher am Okular (12) angeordnet ist, wobei
zwischen den Bildebenen ein Umkehrsystem (13) angeordnet ist, wobei
in der zweiten Bildebene eine vom Okular (12) aus sichtbare Zielmarke (14) vorgesehen ist, und wobei
in der ersten Bildebene ein als Strichplatte ausgebildetes Absehen (15) angeordnet ist,
**dadurch gekennzeichnet, dass**
im Strahlengang zwischen dem Objektiv (11) und dem Okular (12) ein gegenüber einer optischen Achse (A) geneigter Strahlenteiler (40) angeordnet ist, wobei
eine Projektionseinrichtung (50) zur Erzeugung der Zielmarke (14) auf dem Strahlenteiler (40) vorgesehen ist, wobei
die Projektionseinrichtung (50) eine Lichtquelle (51) aufweist, und wobei
der Strahlenteiler (40) in der zweiten Bildebene angeordnet ist.

2. Zielfernrohr (10) nach Anspruch 1, **dadurch gekennzeichnet, dass** der Strahlenteiler (40) eine gegenüber der optischen Achse (A) geneigte Grenzfläche eines Prismas (41) ist

3. Zielfernrohr (10) nach Anspruch 1, **dadurch gekennzeichnet, dass** der Strahlenteilter (40) von unmittelbar aneinander anliegenden, gegenüber der optischen Achse (A) geneigten Grenzflächen zweier Prismen (41,42) gebildet ist, wobei die Prismen (41,42) aus Materialien mit unterschiedlichen Brechungsindizes gefertigt sind.

4. Zielfernrohr (10) nach einem der vorhergehenden Ansprüche, **dadurch gekennzeichnet, dass** auf einem der Prismen (41,42) wenigstens ein Teil der Projektionseinrichtung (50) angeordnet ist.

5. Zielfernrohr (10) nach einem der vorhergehenden Ansprüche, **dadurch gekennzeichnet, dass** die Projektionseinrichtung (50) eine Blende umfasst

6. Zielfernrohr (10) nach einem der vorhergehenden Ansprüche, **dadurch gekennzeichnet, dass** die Projektionseinrichtung (50) eine Batterie aufweist

7. Zielfernrohr (10) nach einem der vorhergehenden Ansprüche, **dadurch gekennzeichnet, dass** für die Lichtquelle (51) ein dimm- und/oder schaltbarer Regler vorgesehen ist.

8. Zielfernrohr (10) nach einem der vorhergehenden Ansprüche, **dadurch gekennzeichnet, dass** die Zielmarke (14) ein Leuchtpunkt ist

9. Zielfernrohr (10) nach einem der vorhergehenden Ansprüche, **dadurch gekennzeichnet, dass** das Absehen (15) eine dimm- und/oder schaltbare Beleuchtungseinrichtung aufweist

## Claims

1. Telescopic sight (10) having an optical path between an object lens (11) and an eyepiece (12), wherein
between the object lens (11) and the eyepiece (12) two image planes are provided, of which a first image plane is arranged closer to the object lens (11) and a second image plane is arranged closer to the eyepiece (12),
a reversing system (13) being arranged between the image planes, while
a target marker (14) visible from the eyepiece (12) is provided in the second image plane, and
a sight (15) embodied as a reticle is arranged in the first image plane, **characterised in that**
a beam splitter (40) inclined relative to an optical axis (A) is arranged in the optical path between the object lens (11) and the eyepiece (12),
a projection device (50) for generating the target marker (14) being provided on the beam splitter (40),
the projection device (50) comprising a light source (51), and
the beam splitter (40) being arranged in the second image plane.

2. Telescopic sight (10) according to claim 1, **characterised in that** the beam splitter (40) is a boundary surface of a prism (41) that is inclined relative to the optical axis (A).

3. Telescopic sight (10) according to claim 1, **characterised in that** the beam splitter (40) is formed by directly adjacent boundary surfaces of two prisms (41, 42) that are inclined relative to the optical axis (A), the prisms (41, 42) being made from materials with different refractive indices.

4. Telescopic sight (10) according to one of the preceding claims, **characterised in that** at least part of the projection device (50) is arranged on one of the prisms (41, 42).

5. Telescopic sight (10) according to one of the preceding claims, **characterised in that** the projection device (50) comprises a shutter.

6. Telescopic sight (10) according to one of the preceding claims, **characterised in that** the projection device (50) comprises a battery.

7. Telescopic sight (10) according to one of the preceding claims, **characterised in that** a dimmable and/or switchable regulator is provided for the light source (51).

8. Telescopic sight (10) according to one of the preceding claims, **characterised in that** the target marker (14) is a luminous dot.

9. Telescopic sight (10) according to one of the preceding claims, **characterised in that** the sight (15) comprises a dimmable and/or switchable illuminating device.

## Revendications

1. Lunette de visée (10) avec un trajet de rayons entre un objectif (11) et un oculaire (12),
deux plans focaux étant prévus entre l'objectif (11) et l'oculaire (12), un premier plan focal étant situé plus près de l'objectif (11) et un deuxième plan focal étant situé plus près de l'oculaire (12),
un système d'inversion (13) étant placé entre les plans focaux,
un repère de visée (14) visible à partir de l'oculaire (12) étant prévu dans le deuxième plan focal,
et un réticule (15) conçu comme une plaque réticulée étant placé dans le premier plan focal,
**caractérisée en ce qu'**un séparateur de faisceau (40) incliné par rapport à un axe optique (A) est placé dans le trajet de rayons entre l'objectif (11) et l'oculaire (12),
un dispositif de projection (50) étant prévu pour produire le repère de visée (14) sur le séparateur de faisceau (40),
le dispositif de projection (50) comportant une source lumineuse (51)
et le séparateur de faisceau (40) étant placé dans le deuxième plan focal.

2. Lunette de visée (10) selon la revendication 1, **caractérisée en ce que** le séparateur de faisceau (40) est une surface limite, inclinée par rapport à l'axe optique (A), d'un prisme (41).

3. Lunette de visée (10) selon la revendication 1, **caractérisée en ce que** le séparateur de faisceau (40) est formé par des surfaces limites, directement adjacentes et inclinées par rapport à l'axe optique (A), de deux prismes (41, 42), les prismes (41, 42) étant fabriqués en des matériaux dont les indices de réfraction sont différents.

4. Lunette de visée (10) selon l'une des revendications précédentes, **caractérisée en ce qu'**au moins une partie du dispositif de projection (50) est placée sur l'un des prismes (41, 42).

5. Lunette de visée (10) selon l'une des revendications précédentes, **caractérisée en ce que** le dispositif de projection (50) comprend un diaphragme.

6. Lunette de visée (10) selon l'une des revendications précédentes, **caractérisée en ce que** le dispositif de projection (50) comporte une batterie.

7. Lunette de visée (10) selon l'une des revendications précédentes, **caractérisée en ce qu'**un dispositif de réglage dont l'intensité peut être réglée et/ou qui peut être éteint est prévu pour la source lumineuse (51).

8. Lunette de visée (10) selon l'une des revendications précédentes, **caractérisée en ce que** le repère de visée (14) est un point lumineux.

9. Lunette de visée (10) selon l'une des revendications précédentes, **caractérisée en ce que** le réticule (15) comporte un dispositif d'éclairage dont l'intensité peut être réglée et/ou qui peut être éteint.
